# EUROPEAN PATENT APPLICATION

(11) **EP 4 782 994 A1**
(43) Date of publication of application: **29.07.2026**
(21) Application number: 25153815.3
(22) Date of filing: 24.01.2025
(51) Int. Cl.: G06F 9/445, G06F 9/451

(54) **A METHOD FOR CREATING AND IMPLEMENTING DYNAMIC CONFIGURATIONS IN AN INTERACTIVE MULTI-INTERFACE DEVICE FOR GAMES**

(71) Applicant: GaloGroup, SIA, 5401 Daugavpils (LV)
(72) Inventor: ARKHANGELSKAYA, Diana, LV-5401 Daugavpils (LV); SIMANENKO, Anton, LV-5401 Daugavpils (LV); KHABAROV, Sergei, LV-5401 Daugavpils (LV); SUHARNIKOV, Vadim, LV-5401 Daugavpils (LV); RASIS, Karlis, LV-5401 Daugavpils (LV); SAULITIS, Edgars, LV-5401 Daugavpils (LV)
(74) Representative: Vitina, Maruta

(57) **Abstract**

The present invention relates to a method for creating and implementing dynamic configurations in an interactive multi-interface device for games utilizing machine learning (ML) techniques and may be used with a particular focus on children aged 7-15 years. The method comprises the steps of: (a) receiving and processing input commands from a user 5; (b) creating a configuration; (c) dynamic reconfiguring, wherein the processing unit 3 updates the functions of each of the input interfaces 1 and each of the output interfaces 2 by assigning the functions and the states according to the newly determined configuration; (d) implementing the newly reconfigured configuration; step (d) includes activating each of the output interfaces 2 according to the newly assigned functions and enabling each of the input interfaces 1 to receive the input commands according to the newly assigned functions; wherein the steps (a), (b), (c) and (d) are performed in the same portable, handheld, interactive multi-interface device for games. In the steps (a), (b) and (c) the wirelessly connected external ML model may be used for the analysis.

## Description

### TECHNICAL FIELD

The present invention relates to a method for creating and implementing dynamic configurations in an interactive multi-interface device for games, more particularly, to physical interactive devices with dynamic reconfiguration capabilities utilizing machine learning (ML) techniques and may be used for educational and entertainment purposes targeting children and adults, with a particular focus on children aged 7-15 years.

### BACKGROUND

Traditional interactive devices typically offer fixed functionality through dedicated interfaces. While some devices may provide multiple functions, they generally require separate physical controls or interfaces for each function. Additionally, existing solutions for transforming input data often process different input types separately, lacking a unified approach to managing multimodal interactions.

Recent advancements in machine learning and sensor technologies have enabled new possibilities for human-computer interaction. However, existing solutions often emphasize either software-based interfaces or hardware-based controls, failing to integrate both aspects into a unified and coherent interactive system.

Therefore, there is a need for an interactive device that seamlessly transitions between different functional modes while maintaining a consistent physical form factor and providing a unified approach to processing various types of input data.

The field of dynamic interfaces has seen significant development, for example, as described in EP3639137A1 which introduces methods for adapting software user interfaces based on user experience levels and interaction patterns. These systems and methods are utilizing machine learning to analyse user interactions and modify interface presentations accordingly, particularly in traditional software applications where interface elements like buttons, menus, and layouts can be dynamically adjusted to match user proficiency. However, the increasing complexity of modern interactive devices presents technical challenges not addressed by existing solutions. While said invention effectively handles software interface adaptation, it does not provide a possibility of dynamically reconfiguring physical interface functionality in real-time.

### TECHNICAL PROBLEM

The problem to be solved by the present invention is to provide a possibility to dynamically reconfigure input and output interfaces in an interactive multi-interface device by processing voice commands and other input commands using machine learning models to determine new configurations that specify functions and states for each interface. This solution enables transforming interfaces simultaneously based on user input to create appropriate configurations for game creation and implementation, while ensuring reliable operation and synchronization across all reconfigured interfaces within a single portable device.

### SUMMARY

The technical problem is solved in a method for creating and implementing dynamic configurations in an interactive multi-interface device for games, comprising the steps of:
(a) receiving and processing input commands from a user interacting with one of input interfaces - a microphone; step (a) includes capturing user voice commands via the microphone; processing the captured voice commands by a processing unit, including converting the captured voice commands into a digital format, performing a speech recognition, sending the recognized commands to a ML model for further analysis and determining a new configuration;
(b) creating a configuration; step (b) includes processing the recognized commands using the ML model; determining functions required for each of the input interfaces and each of output interfaces; determining the new configuration that specifies a set of defined functions and states for each of the defined function for each of the input interfaces and each of the output interfaces, wherein the functions define an operational mode of each of the input interfaces and each of the output interfaces; wherein a state defines parameter values for the given function; storing the newly determined configuration in a memory of a processing unit making said configuration available for subsequent retrieval and implementation;
(c) dynamic reconfiguring, wherein the processing unit updates the functions of each of the input interfaces and each of the output interfaces by assigning the functions and the states according to the newly determined configuration;
(d) implementing the newly reconfigured configuration; step includes activating each of the output interfaces according to the newly assigned functions and enabling each of the input interfaces to receive the input commands according to the newly assigned functions;
wherein the steps (a), (b), (c) and (d) are performed in the same portable, handheld, interactive multi-interface device for games.

In the step (a) the input commands from the user may be additionally received by at least one of the input interfaces, selected from the group including touch sensor, an accelerometer, a video interface.

In the step (b) while processing the current input commands, historical data of previous configurations, usage patterns of each of the input interfaces and each of the output interfaces may be also used.

The processing unit may operate using the local ML model that implements deep learning, machine learning or artificial intelligence algorithms.

In the steps (a), (b) and (c) the processing unit may operate using for the analysis the wirelessly connected external ML model that implements deep learning, machine learning or artificial intelligence algorithms.

The portable, handheld, interactive multi-interface device for games may include the input interfaces: the microphone and the input interfaces selected from the group including the touch sensor, the accelerometer, the video interface and the output interfaces: an LED display matrix and a speaker.

The portable, handheld, interactive multi-interface device may have a length and a width in the range of 8-15 cm and a height not exceeding 15 cm. The dimension of at least 8 cm is necessary for convenient placement of input interfaces, output interfaces and processing unit. The dimension of maximum 15 cm is necessary for comfortable holding by child's hands.The portable, handheld, interactive multi-interface device may be configured in the shape of a cube or a parallelepiped.

### BRIEF DESCRIPTION OF THE DRAWINGS

The detailed description is described with reference to the accompanying figures. In the figures:
Fig. 1 is a schematic block diagram illustrating the process of receiving and processing input commands (a), creating a configuration (b), and dynamic reconfiguring (c) using a local ML model, showing data flow between input interfaces, output interfaces and processing unit;
Fig. 2 is a schematic block diagram illustrating the process of receiving and processing input commands (a), creating a configuration (b), and dynamic reconfiguring (c) using an external ML model, showing data flow between input interfaces, output interfaces, processing unit, and a wirelessly connected external ML model;
Fig. 3 is a schematic block diagram illustrating the process of implementing the newly reconfigured configuration (d), showing data flow between input interfaces, output interfaces, and processing unit, with ML models shown inactive (dotted lines) as they are not involved in this step.

### DETAILED DESCRIPTION

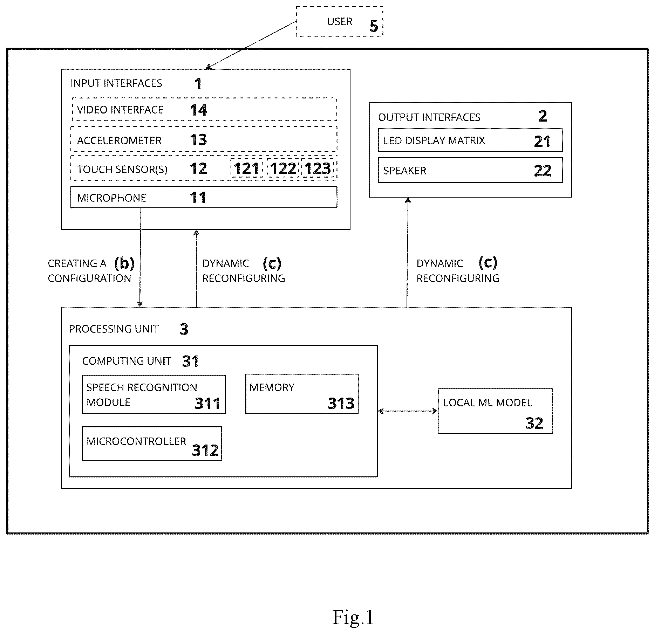

The proposed method is implemented in a portable, handheld, interactive multi-interface device for games configured as a handheld and having dimensions in the range of 8-15 cm. The device (Fig. 1; 2 and 3) includes input interfaces 1, output interfaces 2 and a processing unit 3.

The input interfaces 1 includes a microphone 11 and may include one or several of the following interfaces: at least one touch sensor 12, an accelerometer 13, a video interface 14 (shown by dotted lines). The output interfaces 2 include an LED display matrix 21 and a speaker 22.

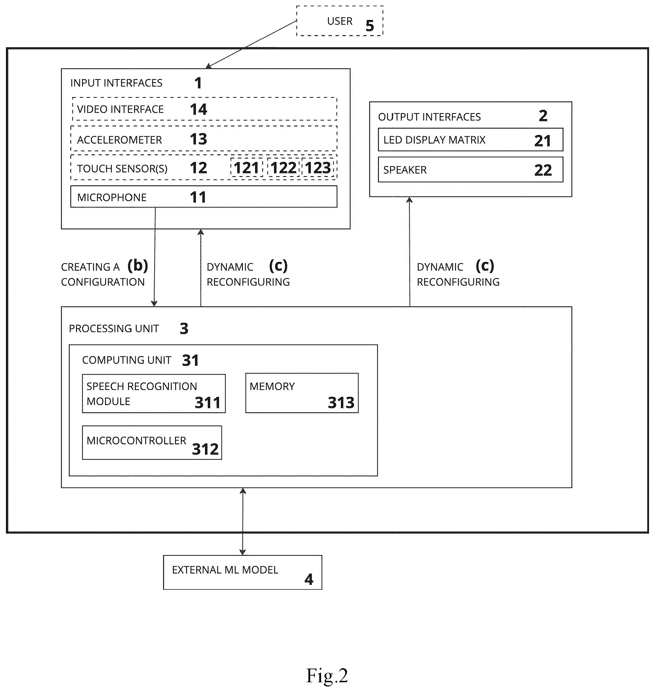

The processing unit 3 includes a computing unit 31 (which includes a software-based speech recognition module 311, a microcontroller 312 running control software, a memory 313 for storing software code and configuration data). The processing unit 3 may include a local ML model 32 (Fig. 1) or is configured to be wirelessly connected to an external ML model 4 (Fig. 2).

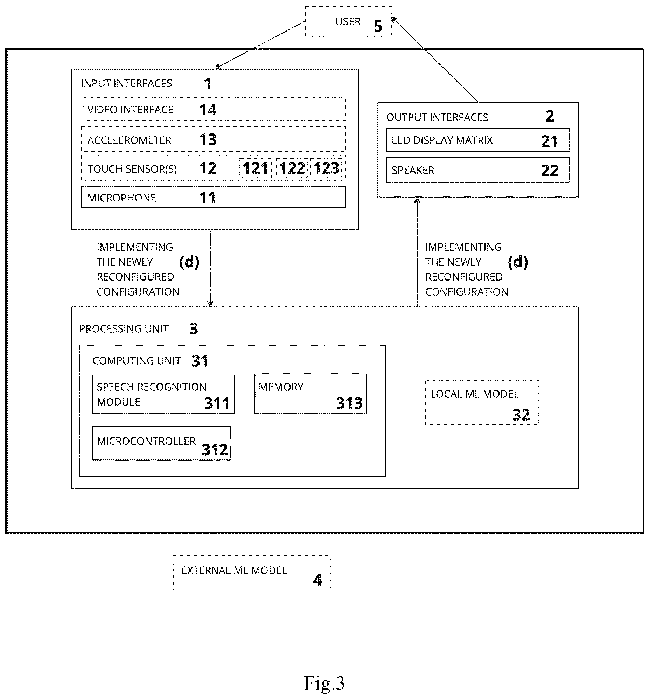

Fig. 3 illustrates the step (d) of implementing the newly reconfigured configuration wherein the local ML model 32 and external ML model 4 are not involved in the step (d) (these parts are shown with dotted lines), therefore Fig. 3 relates to both devices of Fig. 1 and Fig. 2.

### Example 1 (The game: "Traffic light")

The Example 1 of the proposed method for creating and implementing dynamic configurations is implemented in a handheld, interactive, multi-interface device for games (Fig. 1 or Fig. 2) configured as a cube and having dimensions 12 cm x 12 cm x 12 cm. The input interfaces include a microphone 11, touch sensors 12 - a first touch sensor 121, a second touch sensor 122 - capable to operate in a double button mode and an accelerometer 13. The processing unit 3 includes a local ML model 32 (Fig. 1) or is configured to be wirelessly connected to an external ML model 4 (Fig. 2).

The method for creating and implementing dynamic configurations in an interactive multi-interface device for games is realized as follows.

**The step (a):** receiving and processing input commands from a user 5 interacting with one of the input interfaces 1 - a microphone 11.

The step (a) includes:
- capturing user voice commands via the microphone 11. User 5 speaks "Be a traffic light" into a microphone 11 being one of the input interfaces 1.
- processing captured voice commands by a processing unit 3.

The processing unit 3 processes the voice command through:
- converting analog voice signal into a digital format,
- performing speech recognition to convert to text command,
- sending the recognized commands to ML Model 32 or 4 which analyzes the recognized commands and determines new game configuration using machine learning algorithms.

**The step (b):** creating a configuration.

Step (b) includes:
- processing recognized commands using the ML Model 32 or 4; determining functions required for each of the input interfaces 1 and each of the output interfaces 2; determining the new configuration that specifies a set of the defined functions and states for each of the defined functions for each of the input interfaces 1 and each of the output interfaces 2, wherein a function defines an operational mode of an interface; wherein a state defines parameter values for a given function;
- storing the newly determined configuration in a memory 313 of the processing unit 3 making it available for subsequent retrieval and implementation.

The determined functions and the states for each of the input interfaces 1 and each of the output interfaces 2 are following.

### For the output interfaces 2

### The LED display matrix 21:

The function: a visual signal display
The possible states:
   - RED: {duration=15, color="red", intensity=1}
   - YELLOW: {duration=1, color="yellow", intensity=1}
   - GREEN: {duration=5, color="green", intensity=1}
   - BLINKING_RED: {interval=0.5, color="red", intensity=1}
   - OFF: {color="none", intensity=0}
The initial state: RED

### The speaker 22:

The function: an audio announcer
The possible States:
   - RED: {message="Don't walk", volume=0.7}
   - GREEN: {message="Walk signal is on", volume=0.7}
   - YELLOW: {message="Warning: signal changing", volume=0.7}
   - BUTTON_PRESS: {message="Wait for green signal", volume=0.7}
   - SILENT: {volume=0}
The initial state: RED

### For the input interfaces 1

### The touch sensors 12:

The function: a signal button
The possible states:
   - ACTIVE: {mode="double_button", button_1="single_press", button_2="voice_activation", debounce_time=0.02}
   - DISABLED: {mode="ignore_input"}
The initial state: ACTIVE

### The microphone 11:

The function: a command receiver
The possible states:
   - LISTENING: {mode="command_recognition", sensitivity="medium"}
   - STANDBY: {mode="low_power", sensitivity="low"}
   - DISABLED: {mode="off"}
The initial _state: STANDBY

### The accelerometer 13:

The function: an orientation monitor
The possible states:
   - ACTIVE: {mode="continuous", sampling_rate=10, threshold=15}
   - STANDBY: {mode="low_power", sampling_rate=1}
   - DISABLED: {mode="off"}
The initial state: DISABLED

The newly determined configuration is stored in a memory 313 of the processing unit 3 making it available for subsequent retrieval and implementation.

### The step (c): dynamic reconfiguring

The processing unit 3 simultaneously updates functions of each of the input interfaces 1 and each of the output interfaces 2 by assigning the functions and the states according to the newly determined configuration.

### For the output interfaces 2

The LED display matrix 21:
- updates the function to "a visual signal display";
- assigns the initial state RED: {duration=15, color="red", intensity=1}

The speaker 22:
- updates the function to "an audio announcer";
- assigns initial state RED: { message="Don't walk", volume=0.7}.

### For the input interfaces 1:

The touch sensor 12:
- updates the function to "a signal button";
- assigns the initial state ACTIVE: {mode="double_button", button_1="single_press", button_2="voice_activation", debounce_time=0.02}.

The microphone 11:
- updates the function to "a command receiver";
- assigns the initial state STANDBY: {mode="low_power", sensitivity="low"}.

The accelerometer 13:
- updates the function to "an orientation monitor";
- assigns the initial state DISABLED: {mode="off"}.

**The step (d):** implementing the newly reconfigured configuration (Fig. 3).

Step (d) includes - activating the output interfaces 2 according to the newly assigned functions and enabling the input interfaces 1 to receive the input commands according to their newly assigned functions.

The output interfaces 2 are activated according to the assigned functions:
the LED display matrix 21 begins displaying traffic signal patterns;
the speaker 22 starts providing audio announcements.

The input interfaces 1 are enabled to receive commands per the assigned functions: the touch sensors 12 is activated with:
- a first touch sensor 121 for pedestrian crossing;
- a second touch sensor 122 for enabling voice command reception;

the microphone 11 is enabled for voice command reception;
the accelerometer 13 is disabled.

The proposed method runs continuously in the same handheld device, maintaining coordinated operation of all input interfaces 1 and output interfaces 2 according to the assigned functions and the states.

The portable, handheld, interactive multi-interface device with the implemented "Traffic light" configuration are ready for immediate usage as a device for a game with the "Traffic light" configuration or may be used for a game with the "Traffic light" configuration later.

### Example 2 (Game: "Magic lamp")

The Example 2 of the proposed method for creating and implementing dynamic configurations is implemented in a handheld, interactive, multi-interface device for games (Fig. 2) configured as a cube and having dimensions 10 cm x 10 cm x 10 cm. The input interfaces include a microphone 11, touch sensors 12 - a first touch sensor 121, a second touch sensor 122 and a third touch sensor 123 capable to operate in a triple button mode and an accelerometer 13. The processing unit 3 is configured to be wirelessly connected to an external ML model 4.

This example demonstrates how the proposed method for creating and implementing dynamic configurations in an interactive multi-interface device for games is used for dynamic configurations for an interactive game of "Magic lamp" simulation with several dynamic configurations, here marked as "Phases".

### Phase 1 - "Magic lamp with a speed control"

The computing unit 31 processes voice commands and touch inputs to create a "Magic lamp" effect where yellow pixels appear randomly across the LED matrix 21 at an adjustable rate controlled by a first touch sensor 121, a second touch sensor 122, while a third touch sensor 123 enables voice command recognition for subsequent phases.

The method for creating and implementing dynamic configurations in an interactive multi-interface device for games is realized as follows.

**The step (a):** receiving and processing input commands from a user 5 interacting with one of the input interfaces 1 - a microphone 11.

Step (a) includes:
- capturing user voice commands via the microphone 11. User 5 speaks "Be a blinking magic lamp" into a microphone 11 being one of the input interfaces 1.
- processing captured voice commands by a processing unit 3.

Processing unit 3 processes the voice command through:
- converting analog voice signal into a digital format,
- performing speech recognition to convert to text command,
- sending the recognized commands to ML Model 32 or 4 which analyzes the recognized commands and determines new game configuration using machine learning algorithms.

**The step (b):** creating a configuration.

Step (b) includes:
- processing recognized commands using the ML Model 32 or 4; determining functions required for each of the input interfaces 1 and each of the output interfaces 2; determining the new configuration that specifies a set of the defined functions and states for each of the defined functions for each of the input interfaces 1 and each of the output interfaces 2, wherein a function defines an operational mode of an interface; wherein a state defines parameter values for a given function;
- storing the newly determined configuration in a memory 313 of the processing unit 3 making it available for subsequent retrieval and implementation.

The determined functions and the states for each of the input interfaces 1 and each of the output interfaces 2 are following.

### For the output interfaces 2:

### The LED display matrix 21:

The function: a magical light display
The possible States:
- RANDOM_PIXELS: {pixel_pattern="random_sequence", color="yellow", intensity=0.5, blink_rate=1, all_pixels=true}
- OFF: {intensity=0}
Initial_state: RANDOM PIXELS

### The speaker (22):

The function: a magic guide
The possible states:
   - WELCOME: {message="Welcome to your magical lamp! Use the first touch sensor 121 and the second touch sensor 122 to control the blinking speed. When you're ready for more magic, press the third touch sensor 123 and say your wish! ", volume=0.7}
   - SPEED_CHANGE: {message="The magic flows [faster/slower] now", volume=0.5}
   - SILENT: {volume=0}
The initial _state: WELCOME

### For input interfaces (1):

### The touch sensors 12:

The function: Magic Controller
The possible states:
   - ACTIVE: {mode="triple_button", button_1="decrease_rate", button_2="increase_rate", button_3="voice_activation", rate_step=0.2, min_rate=0.2, max_rate=3}
   - DISABLED: {mode="ignore_input"}
The initial _state: ACTIVE

### The microphone 11:

The function: a command receiver
The possible States:
   - STANDBY: {mode="low_power", sensitivity="low"}
   - LISTENING: {mode="command_recognition", sensitivity="medium"}
The initial _state: STANDBY

### The accelerometer 13:

The function: None
The state: DISABLED: {mode="off"}

The newly determined configuration is stored in memory 313 of the processing unit 3 making it available for subsequent retrieval and implementation.

### The step (c): dynamic reconfiguring

The processing unit 3 simultaneously updates functions of each of the input interfaces 1 and each of the output interfaces 2 by assigning the functions and the states according to the newly determined configuration.

### For the output interfaces 2:

The LED display matrix 21:
- updates the function to "a magical light display";
- assigns the initial state RANDOM_PIXELS with yellow color.

The speaker 22:
- updates the function to "a magic guide";
- assigns the initial state WELCOME.

### For the input interfaces 1:

The touch sensors 12:
- updates the function to "a magic controller";
- assigns the initial state ACTIVE with a triple button mode for a first touch sensor 121, a second touch sensor 122 and a third touch sensor 123.

The microphone 11:
- updates the function to "a command receiver";
- assigns the initial state STANDBY.

The accelerometer 13:
- sets to DISABLED state.

**The step (d):** implementing the newly reconfigured configuration.

Step (d) includes - activating the output interfaces 2 according to the newly assigned functions and enabling the input interfaces 1 to receive the input commands according to the newly assigned functions.

The output interfaces 2 are activated according to assigned functions:
- the LED display matrix 21 begins displaying random yellow pixels with initial 1Hz blink rate;
- the speaker 22 plays a welcome message explaining the controls.

The input interfaces 1 are enabled to receive commands per assigned functions:
the touch sensors 12 are activated:
   - the first touch sensor 121 decreases blink rate;
   - the second touch sensor 122 increases blink rate;
   - the third touch sensor 123 activates microphone for next command;
the microphone 11 remains in the state STANDBY until the third touch sensor 123 is pressed;
the accelerometer 13 remains disabled.

The proposed method runs continuously in the handheld device, maintaining coordinated operation of all interfaces according to their assigned functions and states. When the third touch sensor 123 is pressed, the microphone 11 state changes to LISTENING, ready to receive the next voice command that will initiate Phase 2 of the "Magic lamp" configuration.

### Phase 2 - "Magic lamp with randoms colors"

After the third touch sensor 123 is pressed in the Phase 1, activating the voice command recognition occurs and the Phase 2 begins when the user speaks the command "Let's colors be random". This demonstrates how the method dynamically reconfigures the interfaces of the device to support a random color generation while maintaining the speed control functionality.

**The step (a):** receiving and processing input commands from a user 5 interacting with one of the input interfaces 1 - a microphone 11.

Step (a) includes:
- capturing user voice commands via the microphone 11. User 5 speaks "Let's colors be random" into a microphone 11 being one of the input interfaces 1.
- processing captured voice commands by a processing unit 3.

The processing unit 3 processes the voice command through:
- converting analog voice signal into a digital format,
- performing speech recognition to convert to text command,
- sending the recognized commands to the external ML Model 4 which analyzes the recognized commands and determines new game configuration using machine learning algorithms.

**The step (b):** creating a configuration.

The step (b) includes:
- processing recognized commands using the ML Model 32 or 4; determining functions required for each of the input interfaces 1 and each of the output interfaces 2; determining the new configuration that specifies a set of the defined functions and states for each of the defined functions for each of the input interfaces 1 and each of the output interfaces 2, wherein a function defines an operational mode of an interface; wherein a state defines parameter values for a given function;
- storing the newly determined configuration in a memory 313 of the processing unit 3 making it available for subsequent retrieval and implementation.

The determined functions and the states for each of the input interfaces 1 and each of the output interfaces 2 are following.

### For the output interfaces 2:

### The LED display matrix 21:

The function: a magical color display
The possible states:
   - RANDOM_COLORS: {colors=["red", "green", "blue", "yellow", "purple", "cyan"], intensity=<current_intensity>, blink_rate=<current_rate>, pixel_pattern=<current_ pattern>, color_change="per_blink", all_pixels=true}
   - OFF: {intensity=0}
The initial_state: RANDOM_COLORS

### The speaker (22):

The function: a magic guide
The possible states:
   - COLOR_UPDATE: {message="Your magical lamp now shimmers with rainbow colors! Keep using the touch sensors 121 and 123 to control speed, or press the third touch sensor 123 when you want to control brightness. ", volume=0.7}
   - SPEED_CHANGE: {message="The magic flows [faster/slower] now", volume=0.5}
   - SILENT: {volume=0}
The initial_state: COLOR UPDATE

### For the input interfaces 1:

### The touch sensors 12:

The function: a magic controller
The possible states:
   - ACTIVE: {mode="triple_button", button_1="decrease_rate", button_2="increase_rate", button_3="voice_activation", rate_step=0.2, min_rate=0.2, max_rate=3.0}
   - DISABLED: {mode="ignore_input"}
The initial _state: ACTIVE

### The microphone 11:

The function: a command receiver
The possible states:
   - STANDBY: {mode="low_power", sensitivity="low"}
   - LISTENING: {mode="command_recognition", sensitivity="medium"}
The initial state: STANDBY

The accelerometer 13:
The function: None
The state: DISABLED: {mode="off"}

The newly determined configuration is stored in the memory 313 of the processing unit 3 making the stored configuration available for subsequent retrieval and implementation.

### The step (c): dynamic reconfiguring

The processing unit 3 simultaneously updates functions of each of the input interfaces 1 and each of the output interfaces 2 by assigning the functions and the states according to the newly determined configuration while maintaining the current blink rate, the intensity and the pixel pattern from the Phase 1.

### For the output interfaces 2:

The LED display matrix 21:
- updates the function to "a magical color display";
- assigns the state RANDOM_COLORS while preserving the current blink_rate, the intensity and the pixel pattern.

The speaker 22:
- updates the function to "a magic guide";
- assigns the initial state COLOR UPDATE.

### For the input interfaces 1:

The touch sensors 12:
- maintains the function "the magic controller" with the same button configuration;
- maintains the ACTIVE state with the triple button mode for the first touch sensor 121, the second touch sensor 122 and the third touch sensor 123.

The microphone 11:
- updates the command list for the next phase;
- returns to the STANDBY state.

The accelerometer 13:
- maintains in the DISABLED state.

**The step (d):** implementing the newly reconfigured configuration.

Step (d) includes - activating the output interfaces 2 according to the newly assigned functions and enabling the input interfaces 1 to receive the input commands according to the newly assigned functions.

The output interfaces 2 are activated according to assigned functions:
- the LED display matrix 21 transits to a random color display mode, maintaining the current blink rate;
- the speaker 22 announces the new color capability and the control options.

The input interfaces 1 maintain their command reception capabilities: the touch sensors 12 continue to control the blink rate:
- the first touch sensor 121 decreases the blink rate;
- the second touch sensor 122 increases the blink rate;
- the third touch sensor 123 is ready to activate the microphone for the next command;

the microphone 11 returns to the state STANDBY until the next third touch sensor 123 pressing;
the accelerometer 13 remains disabled.

The process continues running in the handheld device, now displaying random colors with each blink while maintaining the user's chosen speed setting. When the third touch sensor 123 is pressed again, the device will be ready to receive the next voice command for the Phase 3, which will enable brightness control through device tilting.

### Phase 3 - "Magic lamp with the brightness control"

When the third touch sensor 123 is pressed in the Phase 2, the computing unit 31 activates the voice command recognition. Upon receiving the voice command "Turn right - blinking brighter, turn left - blinking dimmer" the device enters into the Phase 3. This phase demonstrates how the method dynamically reconfigures the interfaces of the devices to support the random color generation while maintaining the speed control functionality.

**The step (a):** receiving and processing input commands from a user 5 interacting with one of the input interfaces 1 - a microphone 11.

Step (a) includes:
- capturing user voice commands via the microphone 11. User 5 speaks "Turn right - blinking brighter, turn left - blinking dimmer" into the microphone 11 being one of the input interfaces 1.
- processing captured voice commands by a processing unit 3.

The processing unit 3 processes the voice command through:
- converting analog voice signal into a digital format,
- performing speech recognition to convert to text command,
- sending the recognized commands to the external ML Model 4 which analyzes the recognized commands and determines new game configuration using machine learning algorithms.

**The step (b):** creating a configuration.

The step (b) includes:
- processing recognized commands using the ML Model 32 or 4; determining functions required for each input interface 1 and each output interface 2; determining a new configuration that specifies a set of defined functions and states for each of defined function for each input interface 1 and each output interface 2, wherein a function defines an operational mode of an interface; wherein a state defines parameter values for a given function;
- storing the newly determined configuration in a memory 313 of the processing unit 3 making it available for subsequent retrieval and implementation;

The determined functions and the states for each of the input interfaces 1 and each of the output interfaces 2 are following.

### For the output interfaces 2:

### The LED display matrix 21:

The function: Magical Color Display
The possible States:
- RANDOM_COLORS: { colors=["red", "green", "blue", "yellow", "purple", "cyan"], intensity=<current_intensity>, blink_rate=<current_rate>, pixel_pattem=<current_ pattern>, color change="per_blink", all_pixels=true, min_intensity=0.1, max_intensity=1, intensity _step=0.1 }
- OFF: {intensity=0}
- The initial_state: RANDOM_COLORS

### The speaker 22:

The function: a magic guide
The possible states:
   - BRIGHTNESS_UPDATE: {message="Your magical lamp now responds to movement! Tilt right to make it brighter, left to make it dimmer. The the first touch sensor 121 and the second touch sensor 122 still control the blinking speed.", volume=0.7}
   - BRIGHTNESS_CHANGE: {message="Magic lamp grows [brighter/dimmer]", volume=0.5}
   - SPEED_CHANGE: {message="The magic flows [faster/slower] now", volume=0.5}
   - SILENT: {volume=0}
The initial_state: BRIGHTNESS UPDATE

### For the input interfaces 1:

### The touch sensors 12:

The function: a Magic Controller
The possible states:
   - ACTIVE: {mode="triple_button", button_1="decrease_rate", button_2="increase_rate", button_3="voice_activation", rate_step=0.2, min_rate=0.2, max_rate=3.0}
   - DISABLED: {mode="ignore_input"}
The initial state: ACTIVE

### The microphone 11:

The function: a command receiver
The possible states:
   - STANDBY: {mode="low_power", sensitivity="low"}
   - LISTENING: {mode="command_recognition", sensitivity="medium"}
The initial _state: STANDBY

### The accelerometer 13:

The function: a brightness controller
The possible states:
   - ACTIVE: {mode="tilt_detection", sampling_rate=10, right_tilt_threshold=15, left_tilt_threshold=15, right_tilt_action="increase_brightness", left_tilt_action="decrease_brightness"}
   - DISABLED: {mode="off"}
The initial state: ACTIVE

The newly determined configuration is stored in the memory 313 of the processing unit 3 making it available for subsequent retrieval and implementation.

### The step (c): dynamic reconfiguring

The processing unit 3 simultaneously updates functions of each of the input interfaces 1 and each of the output interfaces 2 by assigning the functions and the states according to the newly determined while maintaining the current blink rate and the pixel_pattem from the Phase 1 and the current color patterns from the Phase 2.

### For the output interfaces 2:

The LED display matrix 21:
- maintains the function "the magical color display" with random colors;
- updates the RANDOM _COLORS state to include the brightness control parameters;
- maintains the current blink rate from the Phase 1.

The speaker 22:
- updates the function to include brightness change the announcements;
- assigns the initial state BRIGHTNESS UPDATE.

### For the input interfaces:

The touch sensor 12:
- maintains the function "the magic controller" with the same button configuration;
- maintains the ACTIVE state with triple button mode for the first touch sensor 121, the second touch sensor 122 and the third touch sensor 123.

The microphone 1:
- updates command recognition settings;
- returns to the state STANDBY.

The accelerometer 13:
- activates with the function "the brightness controller"
- sets to the ACTIVE state with the tilt detection.

**The step (d):** implementing the newly reconfigured configuration.

The step (d) includes - activating the output interfaces 2 according to the newly assigned functions and enabling the input interfaces 1 to receive the input commands according to the newly assigned functions.

The output interfaces 2 are activated according to assigned functions:
the LED display matrix 21 maintains the random color display and the current blink rate, now responsive to brightness changes;
the speaker 22 announces the new tilt-based brightness control feature.

The input interfaces 1 maintain and extend their control capabilities:
the touch sensors 12 continue to control blink rate:
   - the first touch sensor 121 decreases the blink rate;
   - the second touch sensor 122 increases the blink rate;
   - the third touch sensor 123 activates the microphone for the potential future commands;
the microphone 11 returns to STANDBY;
the accelerometer 13 activates the brightness control:
   the right tilt increases the brightness;
   the left tilt decreases the brightness.

The proposed method runs continuously in the handheld device, maintaining coordinated operation of all interfaces according to their assigned functions and states. This example demonstrates how children can naturally learn to formulate voice commands while playing with the device, starting with simple commands like "Be a blinking magic lamp" and progressively advancing to more complex instructions such as "Turn right - blinking brighter, turn left - blinking dimmer".

The magic lamp example shows how a single physical device can transform into various interactive toys based on a child's imagination and voice commands, seamlessly blending play with learning. By exploring different configurations and seeing immediate feedback from their commands, children naturally develop an understanding of cause-and-effect relationships and interactive device control, all while engaged in creative play.

## Claims

1. A method for creating and implementing dynamic configurations in an interactive multi-interface device for games, comprising the steps of:
(a) receiving and processing input commands from a user (5) interacting with one of input interfaces (1)_- a microphone (11) ; step (a) includes capturing user voice commands via the microphone (11); processing the captured voice commands by a processing unit (3), including converting the captured voice commands into a digital format, performing a speech recognition, sending the recognized commands to a ML model (32 or 4) for further analysis and determining a new configuration;
(b) creating a configuration; step (b) includes processing the recognized commands using the ML model (32 or 4); determining functions required for each of the input interfaces (1) and each of output interfaces (2); determining the new configuration that specifies a set of defined functions and states for each of the defined function for each of the input interfaces (1) and each of the output interfaces (2), wherein the functions define an operational mode of each of the input interfaces (1) and each of the output interfaces (2); wherein a state defines parameter values for the given function; storing the newly determined configuration in a memory (313) of a processing unit (3) making said configuration available for subsequent retrieval and implementation;
(c) dynamic reconfiguring, wherein the processing unit (3) updates the functions of each of the input interfaces (1) and each of the output interfaces (2) by assigning the functions and the states according to the newly determined configuration;
(d) implementing the newly reconfigured configuration; step (d) includes activating each of the output interfaces (2) according to the newly assigned functions and enabling each of the input interfaces (1) to receive the input commands according to the newly assigned functions;
wherein the steps (a), (b), (c) and (d) are performed in the same portable, handheld, interactive multi-interface device for games.

2. The method according to claim 1, wherein in the step (a), the input commands from the user (5) are additionally received by at least one of the input interfaces (1), selected from the group including touch sensors (12), an accelerometer (13), a video interface (14).

3. The method according to claim 1, wherein in the step (b) while processing the current input commands, historical data of previous configurations, usage patterns of each of the input interfaces (1) and each of the output interfaces (2) are also used.

4. The method according to claim 1, wherein the processing unit (3) operates using the local ML model (32) that implements deep learning, machine learning or artificial intelligence algorithms.

5. The method according to claim 1, wherein in the steps (a), (b) and (c) the processing unit (3) operates using for the analysis the wirelessly connected external ML model (4) that implements deep learning, machine learning or artificial intelligence algorithms.

6. The method according to claim 1, wherein the device includes the input interfaces (1): the microphone (11) and input interface selected from the group including the touch sensors (12), the accelerometer (13), the video interface (14) and the output interfaces (2): an LED display matrix (21) and a speaker (22).

7. The method according to claim 6, wherein the device has a length and a width in the range of 8-15 cm and a height not exceeding 15 cm.

8. The method according to claim 6 or 7, wherein the device is configured in the shape of a cube or a parallelepiped.
